(19) Europäisches Patentamt
European Patent Office
Office européen des brevets

(11) **EP 2 569 182 B1**

(12) **EUROPÄISCHE PATENTSCHRIFT**

(45) Veröffentlichungstag und Bekanntmachung des Hinweises auf die Patenterteilung:
**24.09.2014 Patentblatt 2014/39**

(51) Int Cl.:
***B60K 35/00*** *(2006.01)*    ***B62D 15/02*** *(2006.01)*

(21) Anmeldenummer: **11723000.3**

(22) Anmeldetag: **09.05.2011**

(86) Internationale Anmeldenummer:
**PCT/EP2011/002296**

(87) Internationale Veröffentlichungsnummer:
**WO 2011/141149 (17.11.2011 Gazette 2011/46)**

(54) **VERFAHREN ZUM EINPARKEN EINES FAHRZEUGS SOWIE ENTSPRECHENDES EINPARKASSISTENZSYSTEM UND FAHRZEUG**

METHOD FOR PARKING A VEHICLE AND CORRESPONDING PARKING ASSISTANCE SYSTEM AND VEHICLE

PROCÉDÉ POUR GARER UN VÉHICULE ET SYSTÈME D'ASSISTANCE DE STATIONNEMENT APPROPRIÉ ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2010 DE 102010020205**

(43) Veröffentlichungstag der Anmeldung:
**20.03.2013 Patentblatt 2013/12**

(73) Patentinhaber: **Volkswagen Aktiengesellschaft
38436 Wolfsburg (DE)**

(72) Erfinder:
• **TERKES, Mehmet
  38102 Braunschweig (DE)**
• **WUTTKE, Ulrich
  38126 Braunschweig (DE)**
• **HÜGER, Philipp
  38471 Rühen (DE)**
• **WENDLER, Torsten
  38100 Braunschweig (DE)**

(56) Entgegenhaltungen:
| | |
|---|---|
| **EP-A1- 1 642 769** | **EP-A2- 1 626 384** |
| **DE-A1- 10 261 176** | **DE-A1-102005 027 165** |
| **DE-A1-102006 027 114** | **DE-A1-102006 031 961** |

**Beschreibung**

Die vorliegende Erfindung betrifft ein Verfahren, um ein Fahrzeug mit Hilfe eines Einparkassistenzsystems einzuparken sowie ein entsprechend ausgestaltetes Einparkassistenzsystem und Fahrzeug.

Nach dem Stand der Technik sind zahlreiche Einparkassistenzsysteme bekannt, siehe beispielsweise DE 10 2006 056 966A1, DE 10 2005 061 909 A1, DE 10 2005 017 360 A1, DE 10 2004 039 179 A1, DE 103 37 842 A1 und DE 10 204 055 584 A1.

Die EP 1 626 384 A2 offenbart eine Einparkhilfe für ein Kraftfahrzeug gemäß dem Oberbegriff der unabhängigen Ansprüche.

Die DE 10 2006 027 114 A1 beschreibt ein Steuergerät und ein Verfahren zur Fahrerunterstützung beispielsweise beim Einparken eines Fahrzeugs. Dabei wird an einem Umlenkungpunkt an den Fahrer die Anweisung ausgegeben, das Fahrzeug anzuhalten.

Gerade bei halb automatisierten Einparkassistenzsystem, bei denen das Einparkassistenzsystem die Querführung, insbesondere die Lenkung, des Fahrzeugs übernimmt, aber eine Längsführung des Fahrzeugs, d.h. insbesondere ein Bremsen und ein Beschleunigen des Fahrzeugs, von dem Fahrer des Fahrzeugs ausgeführt wird, kommt es bisweilen vor, dass der Fahrer das Fahrzeug zum falschen Zeitpunkt beschleunigt und damit die zum Einparken des Fahrzeugs benötigten Rangierzüge unnötigerweise erhöht werden.

Die vorliegende Erfindung stellt sich die Aufgabe, dieses Problem zu lösen.

Erfindungsgemäß wird diese Aufgabe durch ein Verfahren zum automatischen Einparken eines Fahrzeugs nach Anspruch 1, durch ein Einparkassistenzsystem nach Anspruch 4 und durch ein Fahrzeug nach Anspruch 6 gelöst. Die abhängigen Ansprüche definieren bevorzugte und vorteilhafte Ausführungsformen der vorliegenden Erfindung.

Im Rahmen der vorliegenden Erfindung wird ein Verfahren zum Einparken eines Fahrzeugs mit Hilfe eines Einparkassistenzsystems bereitgestellt. Dabei wird automatisch überwacht, ob sich das Fahrzeug bei einem Einparkvorgang des Einparkassistenzsystems an einem Ende eines aktuellen Rangierzugs des Einparkensvorgangs befindet. Wenn erfasst wird, dass sich das Fahrzeug am Ende des aktuellen Rangierzugs befindet, wird automatisch eine Bremsaufforderung für den Fahrer des Fahrzeugs erzeugt, damit dieser eine Bremse des Fahrzeugs betätigt. Die Bremsaufforderung kann dabei optischer Art (z.B. eine Anzeige), akustischer Art (z.B. eine Tonfolge) oder haptischer Art (z.B. eine Bewegung des Lenkrads) sein.

Durch die Erzeugung der Bremsaufforderung erhält das Einparkassistenzsystem vorteilhafterweise ausreichend viel Zeit, um den Lenkwinkel entsprechend des nächsten Rangierzugs des Einparkvorgangs einzustellen. Dadurch kann der Einparkvorgang wie von dem Einparkassistenzsystem geplant durchgeführt werden.

Ein Ende des aktuellen Rangierzugs liegt dabei dann vor, wenn das von dem Einparkassistenzsystem vorberechnete Ende des aktuellen Rangierzugs (eine entsprechende Zielposition) erreicht worden ist oder wenn der aktuelle Rangierzug von dem Fahrer des Fahrzeugs aktiv, beispielsweise durch einen Gangwechsel, beendet wird. Dabei entspricht das Ende eines Rangierzugs, welches von dem Fahrer aktiv herbeigeführt wird, in der Regel nicht dem Ende des von dem Einparkassistenzsystem berechneten Rangierzugs.

Eine zeitliche Dauer, über welche hinweg die Bremsaufforderung erzeugt wird, hängt dabei zum einen von einem Zeitpunkt ab, zu welchem ein Gangwechsel des Fahrzeugs erfolgt, und zum anderen von einem Ziellenkwinkel ab, welcher einem dem aktuellen Rangierzug direkt folgenden Rangierzug entspricht.

Der Ziellenkwinkel entspricht dabei dem Lenkwinkel des Fahrzeugs, welcher laut dem Einparkassistenzsystem für den nächsten Rangierzug, d.h. demjenigen Rangierzug, welcher dem aktuellen Rangierzug folgt, einzustellen ist.

Am Ende eines von dem Einparkassistenzsystem berechneten Rangierzugs wechselt eine Fahrtrichtungsanzeige des Einparkassistenzsystems, mit welcher angezeigt wird, ob das Fahrzeug während des Einparkvorgangs vorwärts oder rückwärts gefahren werden soll. Nach diesem Wechsel der Fahrtrichtungsanzeige wird die Bremsaufforderung zumindest solange erzeugt, bis der Gangwechsel erfolgt ist.

Eine Lenkdauer Z abhängig von dem Ziellenkwinkel ZLW, dem Istlenkwinkel ILW und einer Lenkwinkeländerungsgeschwindigkeit wird durch die folgende Gleichung (1) berechnet.

$$Z = \frac{ZLW - ILW}{LW\ddot{A}G} \qquad\qquad (1)$$

Nach erfolgtem Gangwechsel wird die Bremsaufforderung solange erzeugt, bis der Istlenkwinkel dem Ziellenkwinkel entspricht, sofern die Lenkdauer größer als eine erste Zeitspanne ist. Sollte die Lenkdauer kleiner als die erste Zeitspanne sein, so wird keine Bremsaufforderung erzeugt.

Bei einer bevorzugten erfindungsgemäßen Ausführungsform wird die Bremsaufforderung nach einem Wechsel der Fahrtrichtungsanzeige zumindest solange erzeugt, bis eine zweite Zeitdauer verstrichen ist.

Mit anderen Worten wird gemäß dieser Ausführungsform die Bremsaufforderung zumindest die zweite Zeitdauer lang (ab dem Zeitpunkt, zu welchem das Fahrzeug das Ende des Aktuellen Rangierzugs erreicht) erzeugt, auch wenn der Gangwechsel bereits vor Ablauf dieser zweiten Zeitdauer erfolgt ist.

Die Fahrtrichtungsanzeige, welche eine Sollvorwärtsfahrt oder eine Sollrückwärtsfahrt des Fahrzeugs anzeigt, wechselt insbesondere von einer Anzeige einer Sollvorwärtsfahrt zu einer Anzeige einer Sollrückwärtsfahrt, wenn entweder vom Fahrer einen Rückwärtsgang des Fahrzeugs eingelegt wird oder wenn sich das Fahrzeug an dem Ende des aktuellen, berechneten Rangierzugs, welcher als Vorwärtsfahrt ausgeführt wurde, befindet. In ähnlicher Weise wechselt die Fahrtrichtungsanzeige von einer Anzeige einer Sollrückwärtsfahrt zu einer Anzeige einer Sollvorwärtsfahrt, wenn der Fahrer einen Vorwärtsgang des Fahrzeugs einlegt oder wenn sich das Fahrzeug an dem Ende des aktuellen, berechneten Rangierzugs, welcher als Rückwärtsfahrt ausgeführt wurde, befindet.

Im Rahmen der Vorliegenden Erfindung wird auch ein Einparkassistenzsystem für ein Fahrzeug bereitgestellt. Dabei umfasst das Einparkassistenzsystem eine Vorrichtung, mit welcher eine Bremsaufforderung erzeugbar ist, eine Steuerung und mindestens einen Sensor. Das Einparkassistenzsystem ist derart ausgestaltet, dass das Einparkassistenzsystem die Bremsaufforderung mit Hilfe der Vorrichtung bei einem Einparkvorgang des Einparkassistenzsystems erzeugt, wenn das Einparkassistenzsystem mit Hilfe des mindestens einen Sensors erfasst, dass sich das Fahrzeug an einem Ende eines aktuellen Rangierzugs des Einparkvorgangs befindet.

Die Vorteile des erfindungsgemäßen Einparkassistenzsystems entsprechen im Wesentlichen den Vorteilen des erfindungsgemäßen Verfahrens, welche vorab im Detail ausgeführt sind, so dass hier auf eine Wiederholung verzichtet wird.

Schließlich wird im Rahmen der vorliegenden Erfindung ein Fahrzeug bereitgestellt, welches ein erfindungsgemäßes Einparkassistenzsystem umfasst.

Die vorliegende Erfindung ist insbesondere für Fahrzeuge geeignet, welche mit einem semiautomatischen Einparkassistenzsystem ausgestaltet sind, wobei die Querlenkung von dem Einparkassistenzsystem und die Längslenkung von dem Fahrer des Fahrzeugs vorgenommen wird. Selbstverständlich ist die vorliegende Erfindung nicht auf diesen bevorzugten Anwendungsbereich eingeschränkt, da die vorliegende Erfindung prinzipiell auch bei Schiffen oder Flugzeugen eingesetzt werden kann.

Im Folgenden wird die vorliegende Erfindung anhand bevorzugter erfindungsgemäßer Ausführungsformen mit Bezug zu den Figuren im Detail beschrieben.

In Fig. 1 ist in Form eines Ablaufdiagramms dargestellt, wann welche Fahrtrichtungsanzeige angezeigt wird.

In Fig. 2 ist grafisch dargestellt, wie lange eine Bremsaufforderung nach einem Wechsel der Fahrtrichtungsanzeige dargestellt wird.

In Fig. 3 ist grafisch dargestellt, wann und wie lange eine Bremsaufforderung nach einem unaufgeforderten Gangwechsel dargestellt wird.

In Fig.4 ist eine spezielle Form einer Bremsaufforderungsanzeige und die Fahrtrichtungsanzeige vergrößert dargestellt.

Fig. 5 stellt schematisch ein erfindungsgemäßes Fahrzeug mit einem erfindungsgemäßen Einparkassistenzsystem dar.

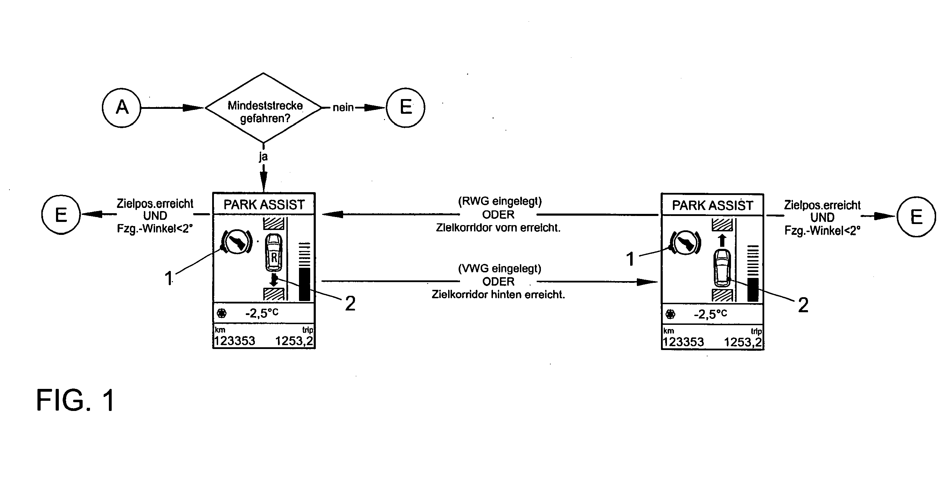

Ein erfindungsgemäßer Einparkvorgang beginnt mit einer Rückwärtsfahrt des Fahrzeugs, was in Fig. 1 durch das Bezugszeichen A dargestellt ist. Sobald von dem Fahrzeug eine Mindeststrecke gefahren worden ist, wird auf einem Bordcomputer des Fahrzeugs die Fahrtrichtungsanzeige 2 mit einer Sollrückwärtsfahrt dargestellt. Wenn bei dieser Rückwärtsfahrt die Zielposition des Fahrzeugs erreicht wird und der Fahrzeugwinkel, d.h. der Winkel zwischen der Längsachse des Fahrzeugs und der Längsachse des Parkplatzes, kleiner als 2° beträgt, ist der Einparkvorgang abgeschlossen, was mit dem Bezugszeichen E dargestellt ist.

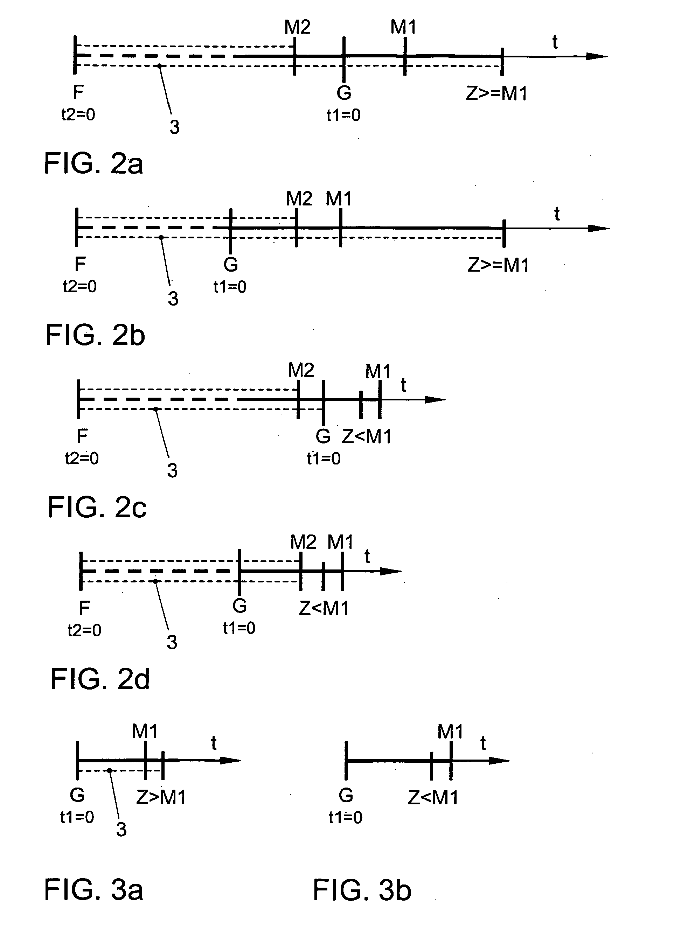

Wenn das Fahrzeug hinten seinen Zielkorridor erreicht, d.h. das Fahrzeug befindet sich an dem Ende des aktuellen Rangierzugs, oder wenn der Fahrer einen Vorwärtsgang einlegt, wird auf dem Bordcomputer die Fahrtrichtungsanzeige 2 mit einer Sollvorwärtsfahrt dargestellt. In diesem Fall erscheint auch in der Regel der Bremsfuß 1 bzw. die Bremsaufforderung, wie es mit den Figuren 2 und 3 im Detail erläutert wird. Wenn bei dieser Vorwärtsfahrt die Zielposition des Fahrzeugs erreicht wird und der Fahrzeugwinkel kleiner als 2° beträgt, ist der Einparkvorgang abgeschlossen, was mit dem Bezugszeichen E dargestellt ist.

Wenn das Fahrzeug vorn seinen Zielkorridor erreicht, d.h. das Fahrzeug befindet sich an dem Ende des aktuellen Rangierzugs, oder wenn der Fahrer einen Rückwärtsgang einlegt, wird auf dem Bordcomputer die Fahrtrichtungsanzeige 2 mit einer Sollrückwärtsfahrt dargestellt und das Fahrzeug bzw. das Einparkassistenzsystem befindet sich wieder in dem bereits oben beschriebenen Zustand. In diesem Fall erscheint in der Regel auch der Bremsfuß 1, wie es im Folgenden genauer erläutert wird.

In Fig. 2 ist dargestellt über welche Zeitdauer 3 hinweg der Bremsfuß nach einem Wechsel der Fahrtrichtungsanzeige 2 in bestimmten Situationen dargestellt wird. Dabei gibt das Bezugszeichen F den Zeitpunkt an, zu welchem die Fahrtrichtungsanzeige 2 ihre Sollfahrtrichtung (d.h. von Rückwärtsfahrt nach Vorwärtsfahrt oder von Vorwärtsfahrt nach Rückwärtsfahrt) wechselt. Das Bezugszeichen G gibt den Zeitpunkt an, zu welchem der Gangwechsel erfolgt ist.

In Fig. 2a erfolgt der Gangwechsel G nach Ablauf der Zeitdauer M2 und die Lenkdauer Z zur Einstellung des Zielwinkels des nächsten Rangierzugs ist größer als die Zeitdauer M1, so dass der Bremsfuß 1 über den Zeitpunkt G hinweg noch die Lenkdauer Z lang dargestellt wird.

In Fig. 2b erfolgt der Gangwechsel G vor Ablauf der Zeitdauer M2 und die Lenkdauer Z ist wiederum größer als die Zeitdauer M1. Daher wird der Bremsfuß 1 nach dem Zeitpunkt G noch die Lenkdauer Z lang dargestellt.

In Fig. 2c erfolgt der Gangwechsel G nach Ablauf der Zeitdauer M2, aber die Lenkdauer Z ist kleiner als die Zeitdauer M1, so dass der Bremsfuß 1 nur bis zu dem Zeitpunkt G dargestellt wird.

In Fig. 2d erfolgt der Gangwechsel G vor Ablauf der Zeitdauer M2 und die Lenkdauer Z ist kleiner als die Zeitdauer M1. Daher wird der Bremsfuß 1 vom Zeitpunkt F an über die Zeitdauer M2 hinweg dargestellt.

Mit Fig. 3 wird der Fall behandelt, dass der Fahrer ohne Aufforderung durch einen Wechsel der Fahrtrichtungsanzeige oder Fahrtrichtungsanweisung 2 den Gang wechselt.

In Fig. 3a ist die Lenkdauer Z größer als die Zeitdauer M1, so dass der Bremsfuß 1 vom Zeitpunkt des Gangwechsels G über die Lenkdauer Z hinweg dargestellt wird.

Dagegen ist in Fig. 3b die Lenkdauer Z kleiner als die Zeitdauer M1, so dass der Bremsfuß 1 nicht dargestellt wird.

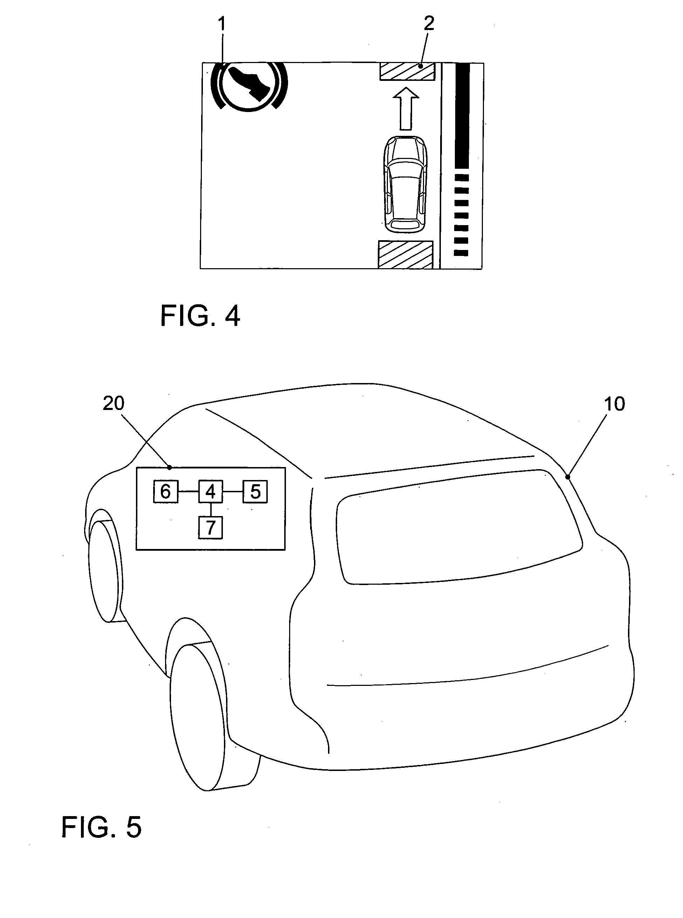

In Fig. 4 ist die Bremsaufforderung bzw. der Bremsfuß 1 und die Fahrtrichtungsanzeige 2 vergrößert dargestellt.

In Fig. 5 ist schematisch ein erfindungsgemäßes Fahrzeug 10 dargestellt, welches ein erfindungsgemäßes Einparkassistenzsystem 20 umfasst. Das Einparkassistenzsystem 20 umfasst seinerseits wiederum eine Steuerung 4, einen Positionssensor 5, einen Gangwechselsensor 6 und einen Bordcomputer 7. Über den Positionssensor 5 erfasst das Einparkassistenzsystem 20 die Position des Fahrzeugs 10 und kann damit ableiten, ob sich das Fahrzeug 10 am Ende eines Rangierzugs befindet. Dagegen erfasst das Einparkassistenzsystem mit dem Gangwechselsensor 6 einen Wechsel von einem Rückwärtsgang in einen Vorwärtsgang oder einen Wechsel von einem Rückwärtsgang in einen Vorwärtsgang des Fahrzeugs.

## Patentansprüche

**1.** Verfahren zum Einparken eines Fahrzeugs (10) unter Verwendung eines semiautomatischen Einparkassistenzsystems (20), bei welchem eine Querlenkung von dem Einparkassistenzsystem (20) und eine Längslenkung von einem Fahrer des Fahrzeugs (10) vorgenommen wird, umfassend die Schritte

(a) automatisches Überwachen, ob sich das Fahrzeug (10) während eines Einparkvorgangs des Einparkassistenzsystems (20) an einem Ende eines aktuellen Rangierzugs des Einparkvorgangs befindet, und
(b) automatisches Erzeugen einer Bremsaufforderung (1) für den Fahrer des Fahrzeugs (10) zum Betätigen einer Bremse des Fahrzeugs, falls im Schritt (a) erkannt worden ist, dass sich das Fahrzeug (10) am Ende des aktuellen Rangierzugs des Einparkvorgangs befindet,
**dadurch gekennzeichnet,**
**dass** die Bremsaufforderung (1) eine zeitliche Dauer (3) lang erzeugt wird, welche abhängig ist

• von einem Zeitpunkt (G), zu welchem ein Gangwechsel des Fahrzeugs (10) erfolgt, und
• von einem Ziellenkwinkel, wobei der Ziellenkwinkel einem dem aktuellen Rangierzug direkt folgenden Rangierzug entspricht,

**dass** eine Lenkdauer Z wie folgt ermittelt wird:

$$Z = \frac{ZLW - ILW}{LW\ddot{A}G}$$

**dass** ZLW der Ziellenkwinkel, ILW der Istlenkwinkel und LWÄG die Lenkwinkeländerungsgeschwindigkeit ist, und

**dass** die Bremsaufforderung (1) angezeigt wird, bis der Istlenkwinkel dem Ziellenkwinkel entspricht, wenn die Lenkdauer (Z) größer als eine Mindestbremsaufforderungserzeugungsdauer (M1) ist.

2.  Verfahren nach Anspruch 1, **dadurch gekennzeichnet, dass** die Bremsaufforderung (1) nach einem Wechsel (F) einer Fahrtrichtungsanzeige (2) des Einparkassistenzsystems (20) zumindest solange erzeugt wird, bis der Gangwechsel (G) erfolgt ist oder bis eine Mindestaufforderungsdauer (M2) verstrichen ist.

3.  Verfahren nach Anspruch 2,
    **dadurch gekennzeichnet,**
    **dass** die Fahrtrichtungsanzeige (2) eine Sollvorwärtsfahrt oder eine Sollrückwartsfahrt des Fahrzeugs (10) anzeigt,
    **dass** die Fahrtrichtungsanzeige (2) von einer Anzeige der Sollvorwärtsfahrt zu einer Anzeige der Sollrückwärtsfahrt wechselt, wenn ein Rückwärtsgang des Fahrzeugs (10) eingelegt wird oder wenn sich das Fahrzeug (10) an dem Ende des aktuellen Rangierzuges befindet, und
    **dass** die Fahrtrichtungsanzeige (2) von einer Anzeige der Sollrückwärtsfahrt zu einer Anzeige der Sollvorwärtsfahrt wechselt, wenn ein Vorwärtsgang des Fahrzeugs (10) eingelegt wird oder wenn sich das Fahrzeug (10) an dem Ende des aktuellen Rangierzuges befindet.

4.  Semiautomatisches Einparkassistenzsystem für ein Fahrzeug (10), bei welchem eine Querlenkung von dem Einparkassistenzsystem (20) und eine Längslenkung von einem Fahrer des Fahrzeugs (10) vorgenommen wird ,
    wobei das Einparkassistenzsystem (20) eine Vorrichtung (7) zur Erzeugung einer Bremsaufforderung (1), eine Steuerung (4) und mindestens einen Sensor (5, 6) umfasst, und
    wobei das Einparkassistenzsystem (20) derart ausgestaltet ist, dass das Einparkassistenzsystem (20) die Bremsaufforderung (1) mittels der Vorrichtung (7) bei einem Einparkvorgang des Einparkassistenzsystems (20) erzeugt, wenn das Einparkassistenzsystem (20) mittels des mindestens einen Sensors (5, 6) erfasst, dass sich das Fahrzeug (10) an einem Ende eines aktuellen Rangierzuges des Einparkvorgangs befindet,
    **dadurch gekennzeichnet,**
    **dass** das Einparkassistenzsystem (20) die Bremsaufforderung (1) eine zeitliche Dauer (3) lang erzeugt, welche abhängig ist

    • von einem Zeitpunkt (G), zu welchem ein Gangwechsel des Fahrzeugs (10) erfolgt, und
    • von einem Ziellenkwinkel, wobei der Ziellenkwinkel einem dem aktuellen Rangierzug direkt folgenden Rangierzug entspricht,

    **dass** das Einparkassistenzsystem (20) ausgestaltet ist, um eine Lenkdauer Z wie folgt zu ermitteln:

$$Z = \frac{ZLW - ILW}{LW\ddot{A}G}$$

    **dass** ZLW der Ziellenkwinkel, ILW der Istlenkwinkel und LWÄG die Lenkwinkeländerungsgeschwindigkeit ist, und
    **dass** das Einparkassistenzsystem (20) die Bremsaufforderung (1) anzeigt, bis der Istlenkwinkel dem Ziellenkwinkel entspricht, wenn die Lenkdauer (Z) größer als eine Mindestbremsaufforderungserzeugungsdauer (M1) ist.

5.  Einparkassistenzsystem nach Anspruch 4, **dadurch gekennzeichnet, dass** das Einparkassistenzsystem (20) zur Durchführung des Verfahrens nach einem der Ansprüche 1-3 ausgestaltet ist.

6.  Fahrzeug mit einem Einparkassistenzsystem (20) nach Anspruch 4 oder 5.

**Claims**

1.  Method for parking a vehicle (10) using a semiautomatic parking assistance system (20) in which transverse steering is performed by the parking assistance system (20) and longitudinal steering is performed by a driver of the vehicle (10), comprising the steps of

    (a) automatically monitoring whether, during a parking process of the parking assistance system (20), the vehicle (10) is located at an end of a current manoeuvre of the parking process, and

(b) automatically producing a braking request (1) for the driver of the vehicle (10) in order to activate a brake of the vehicle if it has been detected in step (a) that the vehicle (10) is located at the end of the current manoeuvre of the parking process,

**characterized**

**in that** the braking request (1) is generated for a time period (3) which is dependent

• on a time (G) at which a gear speed change of the vehicle (10) takes place, and
• on a target steering angle, wherein the target steering angle corresponds to a manoeuvre which directly follows the current manoeuvre,

**in that** a steering period T is determined as follows:

$$T = \frac{TSA - ASA}{RCSA}$$

**in that** TSA is the target steering angle, ASA is the actual steering angle and RCSA is the rate of change of the steering angle, and

**in that** the braking request (1) is displayed until the actual steering angle corresponds to the target steering angle when the steering period (T) is longer than a minimum braking request production period (M1).

2. Method according to Claim 1, **characterized in that** the braking request (1) is generated after a changeover (F) of a travel direction indicator (2) of the parking assistance system (20), at least until the gear speed change (G) has taken place or until a minimum request period (M2) has passed.

3. Method according to Claim 2,

**characterized**

**in that** the travel direction indicator (2) displays a setpoint forward travel or a setpoint rearward travel of the vehicle (10),

**in that** the travel direction indicator (2) changes over from displaying the setpoint forward travel to displaying the setpoint rearward travel if a reverse gear speed of the vehicle (10) is engaged or if the vehicle (10) is located at the end of the current manoeuvre, and

**in that** the travel direction indicator (2) changes over from displaying the setpoint rearward travel to displaying the setpoint forward travel if a forward gear speed of the vehicle (10) is engaged or if the vehicle (10) is located at the end of the current manoeuvre.

4. Semiautomatic parking assistance system for a vehicle (10), in which transverse steering is performed by the parking assistance system (20) and longitudinal steering is performed by a driver of the vehicle (10), wherein the parking assistance system (20) comprises a device (7) for generating a braking request (1), a controller (4) and at least one sensor (5, 6), and wherein the parking assistance system (20) is configured in such a way that the parking assistance system (20) produces the braking request (1) by means of the device (7) in the case of a parking process of the parking assistance system (20) when the parking assistance system (20) senses, by means of the at least one sensor (5, 6), that the vehicle (10) is located at an end of a current manoeuvre of the parking process, **characterized in that** the parking assistance system (20) generates the braking request (1) for a time period (3) which is dependent

• on a time (G) at which a gear speed change of the vehicle (10) takes place, and
• on a target steering angle, wherein the target steering angle corresponds to a manoeuvre which directly follows the current manoeuvre,

**in that** the parking assistance system (20) is configured to determine a steering period T as follows:

$$T = \frac{TSA - ASA}{RCSA}$$

**in that** TSA is the target steering angle, ASA is the actual steering angle and RCSA is the rate of change of the steering angle, and

**in that** the parking assistance system (20) displays the braking request (1) until the actual steering angle corresponds to the target steering angle when the steering period (T) is longer than a minimum braking request production period (M1).

**5.** Parking assistance system according to Claim 4, **characterized in that** the parking assistance system (20) is configured to carry out the method according to one of Claims 1-3.

**6.** Vehicle having a parking assistance system (20) according to Claim 4 or 5.


**Revendications**

**1.** Procédé d'entrée en stationnement d'un véhicule (10) en utilisant un système d'assistance au stationnement (20) semi-automatique, selon lequel un guidage transversal est effectué par le système d'assistance au stationnement (20) et un guidage longitudinal par un conducteur du véhicule (10), comprenant les étapes suivantes

(a) surveillance automatique pour vérifier si le véhicule (10), pendant une entrée en stationnement du système d'assistance au stationnement (20), se trouve à une fin d'une série de manoeuvres actuelle de l'entrée en stationnement, et

(b) génération automatique d'une demande de freinage (1) pour le conducteur du véhicule (10) en vue d'actionner un frein du véhicule s'il a été reconnu à l'étape (a) que le véhicule (10) se trouve à la fin de la série de manoeuvres actuelle de l'entrée en stationnement,

**caractérisé en ce**

**que** la demande de freinage (1) est générée pendant une durée (3) dans le temps qui dépend

* d'un instant (G) auquel a lieu un changement de rapport du véhicule (10), et
* d'un angle de guidage cible, l'angle de guidage cible correspondant à une série de manoeuvres qui suit directement la série de manoeuvres actuelle,

**qu'**une durée de guidage Z est déterminée comme suit :

$$Z = \frac{ZLW - ILW}{LW\ddot{A}G}$$

**que** ZLW désigne l'angle de guidage cible, ILW l'angle de guidage réel et LWÄG la vitesse de variation de l'angle de guidage, et

**que** la demande de freinage (1) est indiquée jusqu'à ce que l'angle de guidage réel corresponde à l'angle de guidage cible, lorsque la durée de guidage (Z) est supérieure à une durée minimale de génération de la demande de freinage (M1).

**2.** Procédé selon la revendication 1, **caractérisé en ce que** la demande de freinage (1) est générée après un changement (F) d'un indicateur de sens de déplacement (2) du système d'assistance au stationnement (20) au moins jusqu'à ce que le changement de rapport (G) ait eu lieu ou jusqu'à ce qu'une durée minimale de la demande (M2) se soit écoulée.

**3.** Procédé selon la revendication 2, **caractérisé en ce**

**que** l'indicateur de sens de déplacement (2) indique une marche avant voulue ou une marche arrière voulue du véhicule (10),

**que** l'indicateur de sens de déplacement (2) passe d'une indication de la marche avant voulue à une indication de la marche arrière voulue lorsqu'un rapport de marche arrière du véhicule (10) est engagé ou lorsque le véhicule (10) se trouve à la fin de la série de manoeuvres actuelle, et

**que** l'indicateur de sens de déplacement (2) passe d'une indication de la marche arrière voulue à une indication de la marche avant voulue lorsqu'un rapport de marche avant du véhicule (10) est engagé ou lorsque le véhicule (10) se trouve à la fin de la série de manoeuvres actuelle.

4. Système d'assistance au stationnement semi-automatique pour un véhicule (10), avec lequel un guidage transversal est effectué par le système d'assistance au stationnement (20) et un guidage longitudinal par un conducteur du véhicule (10),

le système d'assistance au stationnement (20) comprenant un dispositif (7) pour générer une demande de freinage (1), une commande (4) et au moins un capteur (5, 6), et

le système d'assistance au stationnement (20) étant configuré de telle sorte que le système d'assistance au stationnement (20) génère la demande de freinage (1) au moyen du dispositif (7) lors d'une entrée en stationnement du système d'assistance au stationnement (20), lorsque le système d'assistance au stationnement (20) détecte à l'aide de l'au moins un capteur (5, 6) que le véhicule (10) se trouve à une fin d'une série de manoeuvres actuelle de l'entrée en stationnement, **caractérisé en ce**

**que** le système d'assistance au stationnement (20) génère la demande de freinage (1) pendant une durée (3) dans le temps qui dépend

* d'un instant (G) auquel a lieu un changement de rapport du véhicule (10), et
* d'un angle de guidage cible, l'angle de guidage cible correspondant à une série de manoeuvres qui suit directement la série de manoeuvres actuelle,

**que** le système d'assistance au stationnement (20) est configuré pour déterminer une durée de guidage Z comme suit :

$$Z = \frac{ZLW - ILW}{LW\ddot{A}G}$$

**que** ZLW désigne l'angle de guidage cible, ILW l'angle de guidage réel et LWÄG la vitesse de variation de l'angle de guidage, et

**que** le système d'assistance au stationnement (20) indique la demande de freinage (1) jusqu'à ce que l'angle de guidage réel corresponde à l'angle de guidage cible, lorsque la durée de guidage (Z) est supérieure à une durée minimale de génération de la demande de freinage (M1).

5. Système d'assistance au stationnement selon la revendication 4, **caractérisé en ce que** le système d'assistance au stationnement (20) est configuré pour mettre en oeuvre le procédé selon l'une des revendications 1 à 3.

6. Véhicule équipé d'un système d'assistance au stationnement (20) selon la revendication 4 ou 5.

**FIG. 1**

FIG. 2a

FIG. 2b

FIG. 2c

FIG. 2d

FIG. 3a                    FIG. 3b

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006056966 A1
- DE 102005061909 A1
- DE 102005017360 A1
- DE 102004039179 A1
- DE 10337842 A1
- DE 10204055584 A1
- EP 1626384 A2
- DE 102006027114 A1